# EUROPEAN PATENT APPLICATION

(11) **EP 4 641 886 A1**
(43) Date of publication of application: **29.10.2025**
(21) Application number: 24315209.7
(22) Date of filing: 23.04.2024
(51) Int. Cl.: H02K 1/30, H02K 16/00, H02K 21/24, H02K 11/24, B64D 27/30, B64D 35/021, B64D 35/08, F16H 57/00, H02K 7/00, H02K 7/116, B64U 50/20

(54) **AXIAL FLUX ELECTRIC MOTOR**

(71) Applicant: Goodrich Actuation Systems SAS, 27950 Saint-Marcel (FR)
(72) Inventor: SERRAND, Maxime, Paris, 75C, 75017 (FR); SENGHOR, Fiacre, Courbevoie, 92, 92400 (FR)
(74) Representative: Casalonga

(57) **Abstract**

An axial flux electric motor for an aircraft includes a first motor section having a first stator and a first rotor (122), and a second motor section having a second stator and a second rotor (123). The first and second rotors are mounted on a common axle (124). The first rotor is secured to the common axle by a first set of connecting elements (136). The second rotor is secured to the common axle by a second set of connecting elements (138). The first set of connecting elements is arranged to break when the relative torque between the common axle and the first rotor is greater than a first particular threshold. The second set of connecting elements is arranged to break when the relative torque between the common axle and the second rotor is greater than a second particular threshold.

## Description

This disclosure relates to an axial flux electric motor for an aircraft, in particular to a fault tolerant axial flux electric motor for an aircraft

### BACKGROUND

Electric motors are increasingly being considered for use in aircraft as a way to reduce the reliance on fossil fuels in the aviation industry. However, electric motors in aircraft need to be reliable and efficient.

Improvements in electric motors for aircraft are desired.

### SUMMARY

This disclosure provides an axial flux electric motor for an aircraft, the electric motor comprising a first motor section comprising a first stator and a first rotor; a second motor section comprising a second stator and a second rotor; wherein the first rotor and the second rotor are mounted on a common axle; wherein the first rotor is secured to the common axle by a first set of one or more connecting elements; wherein the second rotor is secured to the common axle by a second set of one or more connecting elements; wherein the first set of one or more connecting elements is arranged to break when the relative torque between the common axle and the first rotor is greater than a first particular threshold; and wherein the second set of one or more connecting elements is arranged to break when the relative torque between the common axle and the second rotor is greater than a second particular threshold.

Thus, an axial flux electric motor having two motor sections is provided. The axial flux electric motor may be an axial flux motor of an aircraft. Each motor section has a stator and rotor, with the rotors of the motor sections being mounted on a common axle. The common axle extends along the axis of rotation of the rotors. Each rotor is secured to the common axle by a respective set of one or more connecting elements. Each set of connecting elements is arranged to break when the relative torque between the common axle and the respective rotor is greater than a particular threshold.

An axial flux electric motor has a rotor and a stator that are spaced axially from each other. The rotor and the stator are thus spaced from each other along the common axle of the axial flux electric motor. An axial flux electric motor is arranged to generate a magnetic flux that is aligned substantially parallel to the common axle and thus to the axis of rotation of the rotors. The stator (of the first and/or second motor section) may be arranged to generate a magnetic flux that is aligned substantially parallel to the common axle and thus to the axis of rotation of the rotors. In each motor section of the axial flux electric motor, the rotor and the stator may be spaced from each other along the common axle.

The first and second motor sections may be spaced axially from each other along the common axle. In some examples, the first motor section and the second motor section are coaxial.

In some examples, the first and/or second motor section has a diameter (the dimension of the motor section in a direction perpendicular to the common axle) that is greater than a length (the dimension of the motor section in a direction parallel to the common axle).

The (e.g. first and/or second motor sections of the) axial flux electric motor may have any suitable and desired number of phases. In some embodiments the (e.g. first and/or second motor sections of the) axial flux electric motor have a single phase. In some embodiments the (e.g. first and/or second motor sections of the) axial flux electric motor have three or more phases.

In some examples, the axial flux electric motor is arranged to be substantially fault tolerant. Thus, the axial flux electric motor may be arranged to continue operation (i.e. continue to convert electrical energy into mechanical energy (e.g. in the form of rotational motion)) when the axial flux electric motor experiences a fault. This may allow the aircraft to complete its flight, despite the fault.

The fault may be any kind of fault that an axial flux electric motor may experience. In some examples, the axial flux electric motor is arranged to be tolerant to one or more (e.g. all) of: an open circuit fault (in (e.g. the inverter of) (e.g. one or more
- phases of) the first and/or second motor sections), a short fault (a short circuit at (e.g. the terminal(s) or the inverter(s) of) the (e.g. phase(s) of the) first and/or second motor sections), a turn to turn fault (a fault between windings of the (e.g. phase(s) of the) first and/or second motor sections), a phase to ground fault (in (e.g. one or more phases of) the first and/or second motor sections), a phase to phase fault (between phases of the first motor section and/or between phases of the second motor section).

The fault(s) may occur (and thus the axial flux electric motor may be arranged to be tolerant to fault(s)) in (e.g. one or more (e.g. all) of the phases of) one or both of the first and second motor sections.

In some examples, the axial flux electric motor is arranged to detect a fault (e.g. one or more (e.g. all) of the faults outlined herein) in (e.g. the (e.g. one or more phases of the) first and/or second motor sections of) the axial flux electric motor.

In some examples, the axial flux electric motor comprises drive electronics (e.g. comprising an amplifier and/or a controller). The (e.g. amplifier and/or controller of the) drive electronics may be arranged to control one or more (e.g. all) of: the speed, the torque and the direction of the (e.g. first and/or second motor sections of the) axial flux electric motor. The (e.g. amplifier and/or controller of the) drive electronics may be arranged to detect a fault (e.g. one or more (e.g. all) of the faults outlined herein) in (e.g. the (e.g. one or more phases of the) first and/or second motor sections of) the axial flux electric motor.

The axial flux electric motor may be arranged to be fault tolerant in any suitable and desired way. In some examples, the axial flux electric motor is arranged to be fault tolerant by the first motor section being arranged to continue operation when a fault occurs in the second motor section, and vice versa.

In some examples, the common axle comprises a first axle section and a section axle section. The first rotor may be mounted to the first axle section, e.g. by the first set of one or more connecting elements. The second rotor may be mounted to the second axle section, e.g. by the second set of one or more connecting elements.

The first axle section and the second axle section may be rotatably mounted relative to each other. Thus, the first axle section may be able to rotate relative to (e.g. independently of) the second axle section. This may help to allow the first and second motor sections (via the first and second axle sections) to decouple from each other, e.g. when a fault occurs in one of the motor sections.

In some examples, the first rotor is mounted on the (e.g. first axle section of the) common axle via a first axle spline. In some examples, the second rotor is mounted on the (e.g. second axle section of the) common axle via a second axle spline.

In some examples, the first rotor is secured to the first axle spline by the first set of one or more connecting elements and/or the second rotor is secured to the second axle spline by the second set of one or more connecting elements.

In some examples, the first axle spline is secured to the (e.g. first axle section of the) common axle by the first set of one or more connecting elements and/or the second axle spline is secured to the (e.g. second axle section of the) common axle by the second set of one or more connecting elements.

Thus, the first rotor may be mounted on the (e.g. first axle section of the) common axle using connecting element(s) between the first rotor and the first axle spline and/or between the first axle spline and the (e.g. first axle section of the) common axle. Similarly, the second rotor may be mounted on the (e.g. second axle section of the) common axle using connecting element(s) between the second rotor and the second axle spline and/or between the second axle spline and the (e.g. second axle section of the) common axle.

In some examples, the axial flux electric motor comprises a first gearbox spline and a second gearbox spline. The first axle section may be connected to the first gearbox spline for transmitting rotational motion of the first axle section to a gearbox. The second axle section may be connected to the second gearbox spline for transmitting rotational motion of the second axle section to the gearbox. Thus, in some examples, the axial flux electric motor comprises a gearbox, wherein the common axle is connected to the gearbox, for transmitting rotational motion to the gearbox.

In some examples, the first rotor is connected to the (e.g. first axle section of the) common axle via the first gearbox spline. In some examples, the second rotor is connected to the (e.g. second axle section of the) common axle via the second gearbox spline.

The first rotor may be mounted on the (e.g. first axle section of the) common axle using connecting element(s) between the first rotor and the first gearbox spline and/or between the first gearbox spline and the (e.g. first axle section of the) common axle. Similarly, the second rotor may be mounted on the (e.g. second axle section of the) common axle using connecting element(s) between the second rotor and the second gearbox spline and/or between the second gearbox spline and the (e.g. second axle section of the) common axle.

The gearbox may comprise a reduction gearbox. In some examples, the (e.g. first axle section and/or second axle section) of the common axle is connected to a ball screw or (e.g. directly) to an aircraft (e.g. flight control) surface.

The first and second sets of one or more connecting elements are arranged to break when the relative torque between the common axle and the respective (first or second) rotor is greater than a respective (first or second) particular threshold. The connecting element(s) may thus be arranged to break so to allow relative movement (e.g. rotation) between the respective (first or second) rotor and the (e.g. respective (first or second) axle section of the) common axle. Thus, the relative movement (e.g. rotation) be occur between the components the (first and/or second) sets of one or more connecting elements are connecting. This may, for example, be the rotor(s) and the (e.g. respective axle section of the) common axle, e.g. via a respective axle or gearbox spline.

The first set of one or more connecting elements may comprise one or more (e.g. dowel) pins. The second set of one or more connecting elements may comprise one or more (e.g. dowel) pins. The first and/or second sets of one or more pins may extend between (and, e.g., into) the components they are connecting. This may, for example, be the rotor(s) and the (e.g. respective axle section of the) common axle, e.g. via a respective axle or gearbox spline.

In some examples, the first particular threshold is greater than the operational shear stress between the common axle and the first rotor during normal operation of the axial flux electric motor. In some examples, the second particular threshold is greater than the operational shear stress between the common axle and the second rotor during normal operation of the axial flux electric motor. In some examples the first particular threshold is substantially equal to the second particular threshold.

In some examples, the first and/or second particular threshold is at least 5 Nm, e.g. at least 10 Nm, e.g. at least 15 Nm, e.g. at least 20 Nm

In some examples, the first motor section is arranged to continue to operate, when the second set of one or more connecting elements breaks. In some examples, the second motor section is arranged to continue to operate, when the first set of one or more connecting elements breaks.

In some examples, the (e.g. rotor and/or stator of the) first motor section is electrically, magnetically thermally, and/or mechanically independent of the (e.g. rotor and/or stator of the) second motor section. In some examples, the (e.g. rotor and/or stator of the) first motor section is electrically, magnetically, thermally and/or mechanically separate and/or isolated from the (e.g. rotor and/or stator of the) second motor section.

In some examples, the first stator is arranged (when energised) to drive the first rotor. In some examples, the second stator is arranged (when energised) to drive the second rotor. The axial flux electric motor may be arranged such that the first motor section and the second motor section are arranged to be operated (e.g. the respective stator energised so to rotate the respective rotor) simultaneously, e.g. using the drive electronics. Thus, both motor sections may be arranged to drive (rotate) the common axle simultaneously.

In some examples, the first motor section comprises two first rotors (e.g. arranged either side of the first stator). Thus, the first stator may be arranged (when energised) to drive the two first rotors. In some examples, the first motor section comprises two first stators (e.g. arranged either side of the first rotor). Thus, the two first stators may be arranged (when energised) to drive the first rotor. In some examples, the second motor section comprises two second rotors (e.g. arranged either side of the second stator). Thus, the second stator may be arranged (when energised) to drive the two second rotors. In some examples, the second motor section comprises two second stators (e.g. arranged either side of the second rotor). Thus, the two second stators may be arranged (when energised) to drive the second rotor.

In some examples, the first motor section comprises a first motor housing. In some examples, the second motor section comprises a second motor housing. The first and second motor housings may be spaced axially from each other (along the common axle of the axial flux electric motor). The first stator may be connected (attached) to the first motor housing. The second stator may be connected (attached) to the second motor housing.

### BRIEF DESCRIPTION OF DRAWINGS

One or more non-limiting examples will now be described, by way of example only, and with reference to the accompanying figures in which:
Figures 1a and 1b show schematically axial flux motors;
Figure 2 shows a cut-away perspective view of a fault tolerant axial flux motor;
Figure 3 shows an isolated perspective view of the rotors, of the axial flux motor shown in Figure 2, mounted on the common axle; and
Figure 4 shows schematically a cross-sectional view of the rotors of an axial flux motor.

### DETAILED DESCRIPTION

Electric motors may be used in aircraft, e.g. for propulsion. Examples of a fault tolerant axial flux electric motor will now be described.

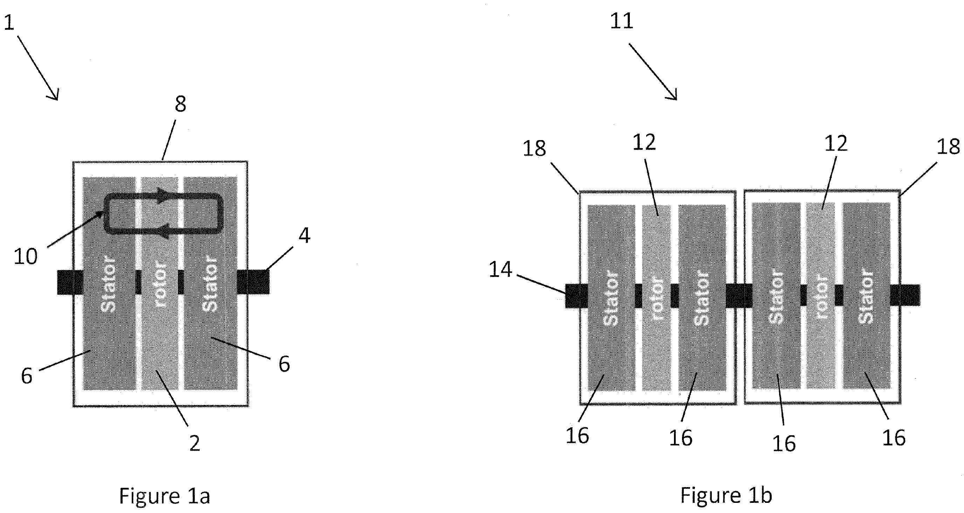

Figure 1a shows schematically an axial flux electric motor 1. The axial flux motor 1 has a rotor 2 connected to an axle 4. The axial flux motor 1 also has two stators 6, held within a housing 8 and arranged either side of the rotor 2. In use, the magnetic flux 10 generated by the motor axial flux motor 1 extends in a substantially axial direction, parallel to the axle 4.

Figure 1b shows schematically a fault tolerant axial flux motor 11. The axial flux motor 11 in Figure 1b is similar to the axial flux motor 1 shown in Figure 1a, except that it has two sets of rotors 12 and stators 16, each within a respective housing 18 and arranged about a common axle 14.

The sets of rotors 12 and stators 16 are arranged in a fault tolerant manner, such that failure of one set of rotors 12 and stators 16 does not cause failure of the entire motor 11. In this way, the motor 11 is able to continue operating even when one set of rotors 12 and stators 16 fails. The sets of rotors 12 and stators 16 are segregated magnetically, electrically, thermally and mechanically from each other to enable this fault tolerant operation.

It will be appreciated that while the axial flux motor 11 shown in Figure 1b has two rotors 12 arranged between respective pairs of stators 16, the rotors 12 and stators 16 could be arranged in the opposite manner, with a pair of rotors arranged either side of a central stator, in each set of rotors and stators.

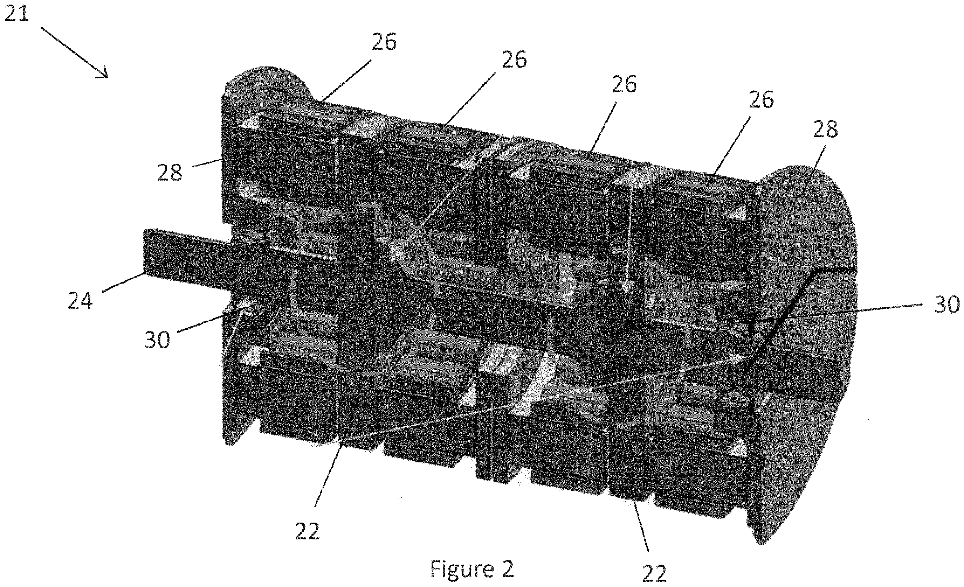

Figure 2 shows a cut-away perspective view of a fault tolerant axial flux motor 21. The axial flux motor 21 is arranged in a similar way to the fault tolerant axial flux motor 11 shown in Figure 1b. The axial flux motor 21 shown in Figure 2 has two sets of rotors 22 and stators 26, each within a respective housing 28 and arranged about a common axle 24.

The stators 26 include multiple windings that, when energised with an alternating current, generate an axial oscillating magnetic flux. The axial oscillating magnetic flux interacts with permanent magnets in the rotors 22, so to rotate the rotors 22 and thus the common axle 24.

The stators 26 are held fixedly in their respective housing 28. The rotors 22 are mounted on the common axle 24, such that they are able to rotate relative to the stators 26 and the housings 28. Two bearings 30 are used to mount the axle 24 in the housings 28, such that the axle 24 is able to rotate relative to the stators 26 and the housings 28.

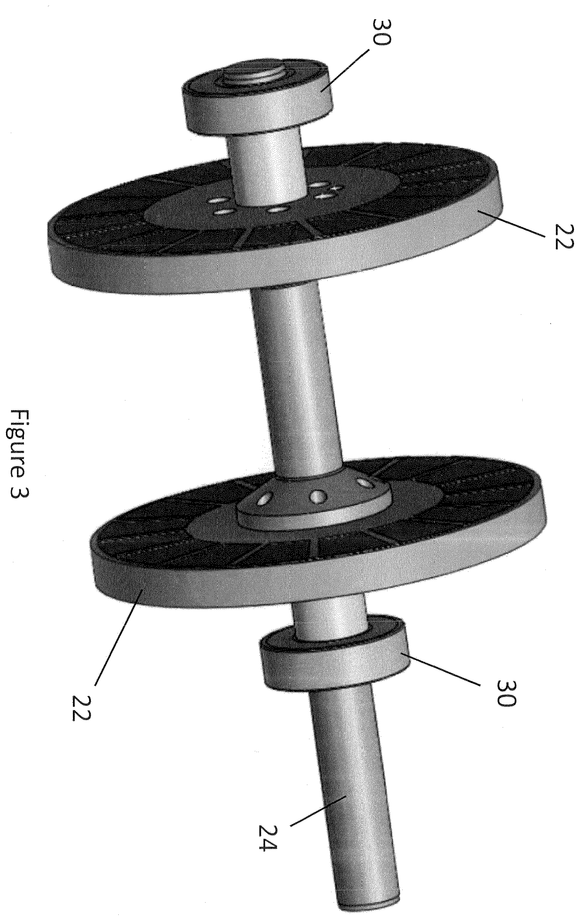

Figure 3 shows an isolated perspective view of the rotors 22 (of the axial flux motor 21 shown in Figure 2) mounted on the common axle 24. Also shown in Figure 3 are the bearings 30 mounted on the axle 24.

As shown in Figure 3, each rotor 22 is attached to the axle 24 via a respective axle spline 32, which enables the rotors 22 to transmit their rotational motion (during operation of the axial flux motor 21) into rotation of the axle 24. The rotors 22 are substantially annular in shape and the axle splines 32 are substantially cone-shaped with a central aperture through which the axle 24 extends.

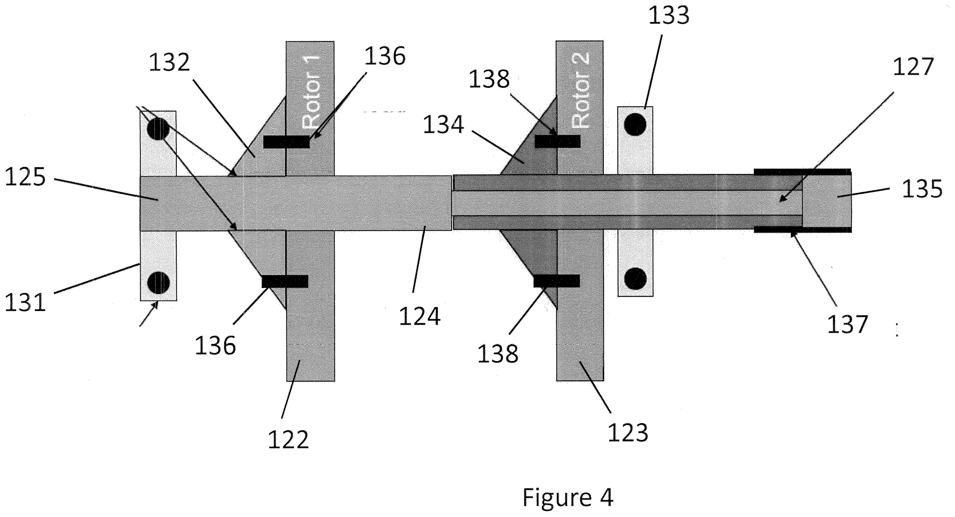

Figure 4 shows schematically a cross-sectional view of the rotors 122, 123 (e.g. corresponding to the rotors 22 shown in Figure 3) mounted on the common axle 124. A first rotor 122 is mounted to a first section 125 of the axle 124, while a second rotor 123 is mounted to a second section 127 of the axle 124. The first and second sections 125, 127 of the axle 124 are coaxial, with the first section 125 extending concentrically within the second section 127. The first and second sections 125, 127 are arranged to be able to rotate relative to each other.

A first bearing 131 is attached to the first section 125 of the axle 124 and a second bearing 133 is attached to the second section 127 of the axle 124.

The first and second sections 125, 127 of the axle 124 are attached to a (e.g. reduction) gearbox (e.g. to transmit the rotational motion from the axle 124 to other components in the aircraft) via first and second gearbox splines 135, 137. In some examples, the first and second sections 125, 127 of the axle 124 are attached to a ball screw or (e.g. directly) to the aircraft (e.g. flight control) surface.

The first and second rotors 122, 123 are attached to the first and second sections 125, 127 respectively of the axle 124 via first and second axle splines 132, 134.

The annular rotors 122, 123 are attached to the first and second axle splines 132, 134 via breaking elements 136, 138 (e.g. pins or dowels) that are arranged to break when a torque between the first or second rotor 122, 123 and their respective axle spline 132, 134 is greater than a particular threshold.

While the breaking elements 136, 138 are shown extending axially between the first and second rotors 122, 123 and their respective axle spline 132, 134, in some examples the breaking elements 136, 138 are provided directly between the first and second rotors 122, 123 and their respective axle section 125, 127. In these examples, the breaking elements 136, 138 may connect the first and second rotors 122, 123 and their respective axle section 125, 127, such that it may not be necessary to provide an axle spline.

Operation of the fault tolerant axial flux motor will now be described with reference to Figure 4.

The first and second rotors 122, 123 are arranged in a fault tolerant axial flux motor, e.g. as shown in Figure 1 or Figure 2. The first and second sections 125, 127 of the axle 124 are attached to a gearbox via first and second gearbox splines 135, 137, so to transmit rotational motion of the axle 124 to other components (e.g. a propulsion system) in the aircraft.

The axial flux motor is energised, so that the stators generate an axial magnetic field. This interacts with the magnets in the rotors 122, 123, which causes the rotors 122, 123, and thus the axle 124 to rotate.

In the event of a fault with one of the rotors 122, 123 or the respective section 125, 127 of the axle 124, that causes a torque between the rotor 122, 123 and its respective axle section 125, 127, if the relative torque is greater than a particular threshold, the breaking elements 136, 138 are arranged to shear, allowing the rotor 122, 123 to move relative to the respective section 125, 127 of the axle 124.

It will be appreciated that if a fault occurs with one of the rotors 122, 123 or the respective section 125, 127 of the axle 124, which causes the breaking elements 136, 138 of that rotor 122, 123 to shear, while that section of the axial flux motor is no longer able to be used to rotate the axle 124, the other of the rotors 122, 123 is still able to operate and rotate the axle 124.

As will be seen from the above examples, having an axial flux electric motor with motor sections that each have a rotor secured to the axle via a respective breakable set of connecting elements, may allow the electric motor to continue operation when a fault occurs in one of the motor sections (that causes a relative torque between the axle and the rotor of the motor section to be greater than the particular threshold). This may thus help to provide a fault-tolerant electric motor and may help to avoid other components of the electric motor, such as the bearing(s), being a point of failure. In aircraft, it may be particularly important to maintain operation of the electric motor. The examples outlined herein may also help to reduce the weight and/or of an (e.g. fault-tolerant) electric motor, owing to the reduction of the envelope for an axial flux motor.

## Claims

1. An axial flux electric motor for an aircraft, the electric motor comprising:
a first motor section comprising a first stator and a first rotor;
a second motor section comprising a second stator and a second rotor;
wherein the first rotor and the second rotor are mounted on a common axle;
wherein the first rotor is secured to the common axle by a first set of one or more connecting elements;
wherein the second rotor is secured to the common axle by a second set of one or more connecting elements;
wherein the first set of one or more connecting elements is arranged to break when the relative torque between the common axle and the first rotor is greater than a first particular threshold; and
wherein the second set of one or more connecting elements is arranged to break when the relative torque between the common axle and the second rotor is greater than a second particular threshold.

2. The axial flux electric motor as claimed in claim 1, wherein the common axle comprises a first axle section and a section axle section;
wherein the first rotor is mounted to the first axle section;
wherein the second rotor is mounted to the second axle section;
wherein the first axle section and the second axle section are rotatably mounted relative to each other.

3. The axial flux electric motor as claimed in claim 2, wherein the first axle section and the second axle section are coaxial.

4. The axial flux electric motor as claimed in claim 2 or 3, wherein the axial flux electric motor comprises a first gearbox spline and a second gearbox spline;
wherein the first axle section is connected to the first gearbox spline for transmitting rotational motion of the first axle section to a gearbox; and
wherein the second axle section is connected to the second gearbox spline for transmitting rotational motion of the second axle section to the gearbox.

5. The axial flux electric motor as claimed in any one of the preceding claims, wherein the first rotor is mounted on the common axle via a first axle spline; and
wherein the second rotor is mounted on the common axle via a second axle spline.

6. The axial flux electric motor as claimed in claim 5, wherein the first rotor is secured to the first axle spline by the first set of one or more connecting elements; and
wherein the second rotor is secured to the second axle spline by the second set of one or more connecting elements.

7. The axial flux electric motor as claimed in any one of the preceding claims, wherein the first set of one or more connecting elements comprises one or more dowel pins; and/or
the second set of one or more connecting elements comprises one or more dowel pins.

8. The axial flux electric motor as claimed in any one of the preceding claims, wherein the first particular threshold is greater than the operational shear stress between the common axle and the first rotor during normal operation of the axial flux electric motor; and/or
wherein the second particular threshold is greater than the operational shear stress between the common axle and the second rotor during normal operation of the axial flux electric motor.

9. The axial flux electric motor as claimed in any one of the preceding claims, wherein the first motor section is arranged to continue to operate, when the second set of one or more connecting elements breaks; and/or
wherein the second motor section is arranged to continue to operate, when the first set of one or more connecting elements breaks

10. The axial flux electric motor as claimed in any one of the preceding claims, wherein the first motor section is electrically, thermally, mechanically and/or magnetically independent of the second motor section.

11. The axial flux electric motor as claimed in any one of the preceding claims, wherein the first motor section has a diameter of the first motor section that is greater than a length of the first motor section; and/or
wherein the second motor section has a diameter of the second motor section that is greater than a length of the second motor section.

12. The axial flux electric motor as claimed in any one of the preceding claims, wherein the first and second motor sections are spaced axially from each other along the common axle.

13. The axial flux electric motor as claimed in any one of the preceding claims, wherein the axial flux electric motor is arranged to be tolerant to one or more of: an open circuit fault, a short fault, a turn to turn fault, a phase to ground fault, and a phase to phase fault.

14. The axial flux electric motor as claimed in any one of the preceding claims, wherein the axial flux electric motor is arranged to detect a fault in the first and/or second motor sections of the axial flux electric motor.

15. The axial flux electric motor as claimed in any one of the preceding claims, wherein the axial flux electric motor comprises drive electronics arranged to control one or more of: the speed, the torque, and the direction of the axial flux electric motor.
